# EUROPÄISCHE PATENTSCHRIFT

(11) **EP 3 213 294 B1**
(45) Veröffentlichungstag und Bekanntmachung des Hinweises auf die Patenterteilung: **05.01.2022**
(21) Anmeldenummer: 15813259.7
(22) Anmeldetag: 29.10.2015
(51) Int. Cl.: G06T 7/00

(54) **ERMITTLUNG LOKALER GÜTEMASSE AUS EINEM VOLUMENBILDDATENSATZ**
DETERMINATION OF LOCAL QUALITY MEASURES FROM VOLUMETRIC IMAGE DATA
DETERMINATION DES MESURES DE QUALITE A PARTIR DES DONNEES VOLUMETRIQUES

(30) Priorität: 30.10.2014 DE 102014115851
(43) Veröffentlichungstag der Anmeldung: 06.09.2017
(73) Patentinhaber: Volume Graphics GmbH, 69115 Heidelberg (DE); Physikalisch-Technische Bundesanstalt (PTB), 38116 Braunschweig (DE)
(72) Erfinder: BARTSCHER, Markus, 31234 Edemissen (DE); GÜNTHER, Thomas, 69118 Heidelberg (DE); POLIWODA, Christoph, 68229 Mannheim (DE); REINHART, Christof, 69120 Heidelberg (DE)
(74) Vertreter: Patentanwälte Olbricht Buchhold Keulertz
(86) Internationale Anmeldenummer: PCT/EP2015/002148
(87) Internationale Veröffentlichungsnummer: WO 2016/066265

(56) Entgegenhaltungen:
- US-A1- 2013 121 564
- KRUTH J P ET AL: "Computed tomography for dimensional metrology", CIRP ANNALS, Bd. 60, Nr. 2, 3. Juni 2011 (2011-06-03), Seiten 821-842, XP028262022, ISSN: 0007-8506, DOI: 10.1016/J.CIRP.2011.05.006 [gefunden am 2011-06-03]
- SAVIO ET AL: "Metrology of freeform shaped parts", CIRP ANNALS, ELSEVIER BV, NL, CH, FR, Bd. 56, Nr. 2, 22. November 2007 (2007-11-22), Seiten 810-835, XP022356750, ISSN: 0007-8506, DOI: 10.1016/J.CIRP.2007.10.008
- ARTEM AMIRKHANOV ET AL: "Fuzzy CT Metrology", COMPUTER GRAPHICS, ACM, 2 PENN PLAZA, SUITE 701 NEW YORK NY 10121-0701 USA, 1 May 2013 (2013-05-01), pages 81-90, XP058046305, DOI: 10.1145/2508244.2508255 ISBN: 978-1-4503-2480-9

## Beschreibung

### Technisches Gebiet

Die vorliegende Erfindung betrifft ein computer-implementiertes Verfahren und eine Vorrichtung zur Berechnung, Darstellung und Weiterverarbeitung von lokalen Gütemaßen aus einem Volumenbilddatensatz.

### Beschreibung des Standes der Technik

Die zerstörungsfreie Untersuchung von Objekten bzw. Gegenständen (Material- bzw. Produktuntersuchung im industriellen Bereich, medizinische Untersuchungen) mittels mehrdimensionaler bildgebender Verfahren ist bekannt. Die Bilddatenerfassung erfolgt hierbei mittels Bildabtastverfahren (Image Scans) unter Verwendung von u. a. Verfahren der Computertomographie, Kernspintomographie, Ultraschallverfahren usw.

Es ist bekannt, dass auf mittels eines Computertomographen gewonnenen Daten (CT-Daten) basierende Messtechnik durchgeführt werden kann. Zu diesem Zwecke ist es notwendig, eine Oberfläche in den Volumendaten zu definieren bzw. zu identifizieren.

Gängige Verfahren zur Identifizierung von Oberflächenverläufen, insbesondere Kantenverläufen, aus Bilddatensätzen, und deren Analyse sind bspw. in "Comparison of surface detection methods to evaluate cone beam computed tomography data for three dimensional metrology" von Heinzl u.a. (DIR 2007 - International Symposium on Digital industrial Radiology and Computed Tomography, June 25-27, 2007, Lyon, France) und in "Fast and Accurate 3D Edge Detection for Surface Reconstruction" von Bähnisch u.a. (Denzler u.a. (Hrsg.): DAGM 2009, LNCS 5748, pp. 111-120, 2009,Springer-Verlag) beschrieben.

Systembedingt enthalten CT-Daten sogenannte Artefakte (Abbildungsfehler), die überlagernde Bildeffekte erzeugen und so die eindeutige Definition der Oberfläche erschweren. Insbesondere treten diese Artefakte lokal unterschiedlich auf, so dass die Güte der Oberflächendefinition lokal unterschiedlich ist.

In den bekannten Verfahren werden beim Einsatz von komplexer 3D-Messtechnik Informationen über die Güte der Oberflächendefinition nicht genutzt. Diese Information ist jedoch messtechnisch wertvoll, da sie eine Beurteilung der Messung und mittelbar auch eine Unsicherheitsbetrachtung der Messung ermöglicht. Die Oberflächenfindung ist hierbei typischerweise ein Schwellwertprozess, bei dem aus den rekonstruierten Volumenmessdaten die Lage der Oberfläche bestimmt wird.

In der optischen Messtechnik werden bei den bekannten Messverfahren der Weißlichtinterferometrie und der konfokalen Mikroskopie "ungültige" Messpunkte (z.B. "Ausreißer" durch Schmutz) einfach verworfen. Es wird dazu die Modulation des Interferenzsignals bzw. die Breite oder das Signal/Rauschverhältnis des konfokalen Signalmaximums ausgewertet. Eine flächenhafte Auswertung erfolgt beispielsweise, indem ein Bilderstapel mit unterschiedlichen Positionen der Fokussierachse aufgenommen und anschließend durch Bestimmung des Kontrastmaximums diejenige z-Position bestimmt wird, bei der das Bild an der jeweiligen Position scharf ist, wodurch eine Oberflächentopografie erhalten wird. Die Vorgehensweise bei der Bestimmung der Wiederholbarkeit bei der Fokusvariation kann aber nicht auf komplexe 3D-Messtechnik wie bspw. die Computertomographie übertragen werden, weil dabei der fokusabhängige lokale Kontrast an einem Messpunkt und nicht wie bei der Computertomographie der Grauwertverlauf im 3D-Messvolumen ausgewertet werden und das Verfahren direkt Oberflächendaten und nicht wie die Computertomographie Volumendaten liefert.

Artem Amirkhanov u.a. beschreiben in "Fuzzy CT Metrology: Dimensional Measurements on Uncertain Data", COMPUTER GRAPHICS, ACM, 2 PENN PLAZA, SUITE 701 NEW YORK NY 10121-0701 USA, 1. Mai 2013, Seiten 81 - 90, einen Ansatz, bei dem ein rekonstruierter 3D-Bilddatensatz einer statistischen Analyse unterzogen wird, um an jedem Raumpunkt die Wahrscheinlichkeit für die Existenz einer Oberfläche zu identifizieren und zu visualisieren. Eine weitergehende Auswertung findet nicht statt.

Aus der EP 2 590 139 Al ist die flächenhafte optische dreidimensionale Messung von Oberflächentopographien bekannt, wobei Oberflächen von Gegenständen basierend auf dem Prinzip der Fokusvariation fotografisch aufgenommen und gemessen werden. Je nach Oberflächengeometrie werden nur bestimmte Teile der Oberfläche gleichzeitig scharf abgebildet, so dass durch Analyse der Variation der Schärfe während eines Aufnahmevorgangs ein 3D-Modell berechnet werden kann. Eine Grauwertbetrachtung findet nicht statt. Kruth J. P. et al. "Computed tomography for dimensional metrology" CIRP ANNALS, Bd. 60, Nr. 2, 3. Juni 2011, Seiten 821 - 842 beschreibt ein Verfahren, bei dem mittels CT-Daten eines Objekts extrahierte Oberflächenkonturen mit vorgegebenen Toleranzen und/oder Kalibrationsmessungen verglichen werden. Damit werden Messgenauigkeiten der Messwerte ermittelt.

US 2013/121564 A1 beschreibt eine Vorrichtung, die Punktwolken verarbeitet. Aus den Daten der Punktwolke wird eine Objektkontur ermittelt. Weiter wird die Genauigkeit der ermittelten Punkte der Objektkontur ermittelt.

### Zusammenfassung der Erfindung

Erfindungsgemäß werden demgegenüber ein computer-implementiertes Verfahren zur Verarbeitung eines Volumenbilddatensatzes mit den Merkmalen des Patentanspruchs 3 sowie eine entsprechende Vorrichtung mit den Merkmalen des Patentanspruchs 1 vorgeschlagen.

Der Erfindung liegt die Erkenntnis zugrunde, dass inhärent bei der nicht-optischen Bilddatenerhebung vorhandene Informationen über Qualitätseigenschaften der Messung in der weiteren Verarbeitung verloren gehen. Diese Informationen können jedoch bei der weiteren Bilddatenverarbeitung als Qualitätsgrö-ßen herangezogen und zur ortsabhängigen Beurteilung von Messergebnissen genutzt werden und so auch zur Optimierung der Messzeit dienen.

Im Stand der Technik werden bei der Definition einer Objektoberfläche Informationen über die Güte des Prozesses nicht bestimmt und im weiteren auch nicht berücksichtigt. Insbesondere wenn ein Export der Oberflächendefinition in andere Softwarelösungen stattfindet, ist diese Information vollständig verloren, da dort dann ausschließlich die ermittelten Konturen weiterverwendet werden. Eine Aussage zur Qualität der Messung eines konkreten Punktes auf der Oberfläche ist nicht möglich und erfolgt auch nicht.

Im Gegensatz hierzu wird die Bilddateninformation erfindungsgemäß so aufbereitet, dass für eine Weiterverarbeitung der Daten zu jedem Oberflächenpunkt eine Güteinformation vorgehalten wird, die angibt, wie gut ein gegebener Objektoberflächenpunkt einen Rückschluss auf die tatsächliche Objektgeometrie des zu untersuchenden Objekts zulässt, wobei zur Berechnung einer bildlichen Wiedergabe und/oder zu weiterführenden Analysen des zu untersuchenden Objekts eine unterschiedliche Gewichtung der Oberflächenpunkte in Abhängigkeit von dem berechneten Qualitätswert erfolgt. Weiter werden das nicht-optische Bildabtastungsverfahren und die sich anschließende Berechnung eines Qualitätswertes regelmäßig mittels eines Testobjekts ausgeführt und die Ergebnisse aufeinander folgender Qualitätswertberechnungen miteinander verglichen und ein Maß für ermittelte Veränderungen berechnet, um in Abhängigkeit von dem berechneten Maß für ermittelte Veränderungen ein Signal zu erzeugen, um die Notwendigkeit einer Wartung oder Reparatur der Vorrichtung anzuzeigen. Die Güteinformation kann bspw. anhand einer Visualisierung dazu dienen, dass auch für einen Laien auf einen Blick erkennbar ist, ob eine dargestellte Kontur bzw. dargestellter Konturabschnitt das Ergebnis einer guten oder einer schlechten (sprich durch Artefakte beeinflussten) Oberflächendefinition ist.

Erfindungsgemäß werden somit bei einer nach bekannten Methoden gefundenen Oberfläche für einen bzw. mehrere bzw. jeden Oberflächenpunkt in einer Umgebung die Grauwertstruktur analysiert und ein Qualitätsmaß errechnet, das die lokale Güte der Oberfläche wiedergibt und als Grundlage zur Ermittlung der Messunsicherheit bzw. Messgenauigkeit dient. Auf der Oberflächendefinition werden Fitpunkte generiert. An die Fitpunkte werden Referenzelemente eingepasst, wobei für ein eingepasstes Referenzelement ein gemittelter Qualitätswert angegeben wird. Als Qualitätsmaß können u.a. das lokale Signal/Rausch-Verhältnis, die Wiederholbarkeit der Kantenfindung, Normalenverläufe, der Gradientenverlauf, die Kantenform mit Bezug auf die Voxelgröße, aus der Kantenfindung resultierende Parameter wie z.B. die Kantenbreite, usw. Verwendung finden.

Erfindungsgemäß wird somit die Berechnung empirisch bestimmbarer Unsicherheitsanteile einer Oberflächenpunktmessung bereitgestellt.

Die Umgebung im Sinne der vorliegenden Erfindung kann eine zwei- oder dreidimensionale Umgebung (also eine Flächen- bzw. Raumumgebung) oder auch eine eindimensionale Umgebung (wie bspw. eine Trajektorie) sein. Im ersten Falle werden die Grauwerte innerhalb der Flächenumgebung analysiert, im zweiten Falle der Grauwertverlauf entlang der Trajektorie. Selbstverständlich können zu einem gegebenen Oberflächenpunkt auch mehrere Trajektorien definiert werden. Die Trajektorien können bspw. senkrecht zu der Oberfläche verlaufen (Normalen durch den Oberflächenpunkt im Bereich der Oberfläche).

Bei der Analyse der Grauwerte finden erfindungsgemäß sogenannte Sekundärinformationen Berücksichtigung. Dabei handelt es sich um Informationen aus dem Gesamtvolumen wie z.B. statistische Informationen oder Informationen von anderen/benachbarten Aufpunkten oder aber auch um Vorwissen bspw. aus vorliegenden Objektdaten. Das Auftreten bestimmter sogenannter "globaler" Effekte (wie z.B. Feldkampartefakte oder Strahlaufhärtungsartefakte) kann in einer realen Anwendung sofort dahingehend berücksichtigt werden, dass diese Artefakte zum Teil ohne Ansehen der Daten berechenbar sind (so z.B. bei Feldkampartefakten, die quasi nur von der Aufnahmegeometrie abhängen). Diese Effekte sind für den gesamten Datensatz (also nicht nur auf der Oberfläche) berechenbar, woraus "globale" Informationen erhalten werden, die als Grundlage für die Bestimmung des Qualitätswertes heranziehbar sind.

Die Erfindung gestattet somit eine Aussage darüber, wie gut ein gegebener Oberflächenpunkt einen Rückschluss auf die tatsächliche Objektgeometrie zulässt. Oder mit anderen Worten: Mit dem erfindungsgemäßen Vorgehen erhält der Anwender eine zusätzliche Information darüber, ob eine ermittelte Kontur an einer gegebenen Stelle die Objektgeometrie zuverlässig wiedergibt oder ob es sich um eine Oberflächendefinition mit geringer Aussagekraft handelt (aufgrund von Messfehlern wie Artefakten o.dgl.).

Das Bestimmen des Qualitätsmaßes gemäß der Erfindung kann bspw. durch eine Analyse des Grauwertverhaltens um einen gegebenen Punkt erfolgen. Der Ansatz hierfür ist die Erkenntnis, dass eine ideale Messung durch bestimmte mathematische Parameter gekennzeichnet ist (bspw. entspricht ein idealer Kantenverlauf einem Integral der Gaußfunktion).

Erfindungsgemäß können einem Anwender in der Darstellung des Messobjekts die unterschiedlichen Qualitätsbereiche visualisiert werden, so dass für ihn erkennbar ist, welche Bereiche ggf. eine schlechte Qualität haben, um eventuelle falsche Schlussfolgerungen zu verhindern.

Diese Darstellung kann beispielsweise dazu eingesetzt werden, einen Anwender bei der richtigen Durchführung eines Objektscans zu unterstützen (also bei der Optimierung der Orientierung bzw. Ausrichtung des zu messenden Objekts, der Einstellung der Strahlintensität bzw. Filter o.dgl.) und insbesondere auch bei Fragestellungen, bei denen es auf eine hohe Güte der Messung in einem Abschnitt ankommt und schlechte Güten in anderen Bereichen des Objekts hinnehmbar sind.

Wesentliche Vorteile ergeben sich auch aus der Berücksichtigung des Gütemaßes in nachfolgenden Auswerte-Schritten wie beispielsweise Koordinatenmesstechnik, Registrierung gegen CAD-Daten, Soll/Ist-Vergleich, Wanddickenanalyse, u.v.m.

Die Erfindung ist selbstverständlich nicht auf die Verfahren der Computertomographie beschränkt, sondern kann auch in allen anderen Verfahren der bildgebenden dreidimensionalen Messtechnik Anwendung finden.

Weitere Vorteile und Ausgestaltungen der Erfindung ergeben sich aus der Beschreibung und der beiliegenden Zeichnung.

Die vorliegende Beschreibung deckt auch einen computerlesbaren Datenträger mit Programmcodemitteln ab, der, wenn die Programmcodemittel auf einem Computer oder einer entsprechenden Recheneinheit ausgeführt werden, das erfindungsgemäße Verfahren durchführt.

Die Erfindung ist anhand eines Ausführungsbeispieles in der Zeichnung schematisch dargestellt und wird im Folgenden unter Bezugnahme auf die Zeichnung ausführlich beschrieben.

### Kurzbeschreibung der Zeichnung

Figur 1 zeigt ein Grauwertbild einer computertomographischen Messung eines kreisringförmigen Bauteils zur Veranschaulichung einer Durchmesserbestimmung.
Figur 2 zeigt das Beispiel der Figur 1 mit einer erfindungsgemäßen Gewichtung der Fitpunkte auf der ermittelten Konturlinie.
Figur 3 zeigt eine graphische Darstellung der Ergebnisse eines erfindungsgemäßen Einpassprozesses.
Figur 4 zeigt einen Schnittkantenverlauf mit Soll/IstVergleich nach einer Registrierung mit konventionellem Best-Fit-Verfahren.
Figur 5 ist ein kumuliertes Abweichungshistogramm des Soll/Ist-Vergleichs der Figur 4.
Figur 6 zeigt einen Schnittkantenverlauf mit Soll/IstVergleich nach einer Registrierung unter Berücksichtigung des erfindungsgemäßen Qualitätsmaß-Verfahrens.
Figur 7 ist ein kumuliertes Abweichungshistogramm des Soll/Ist-Vergleichs der Figur 6.

### Ausführliche Beschreibung

In den Figuren sind gleiche Elemente und auch Elemente mit gleicher Funktion mit gleichen Bezugszeichen bezeichnet.

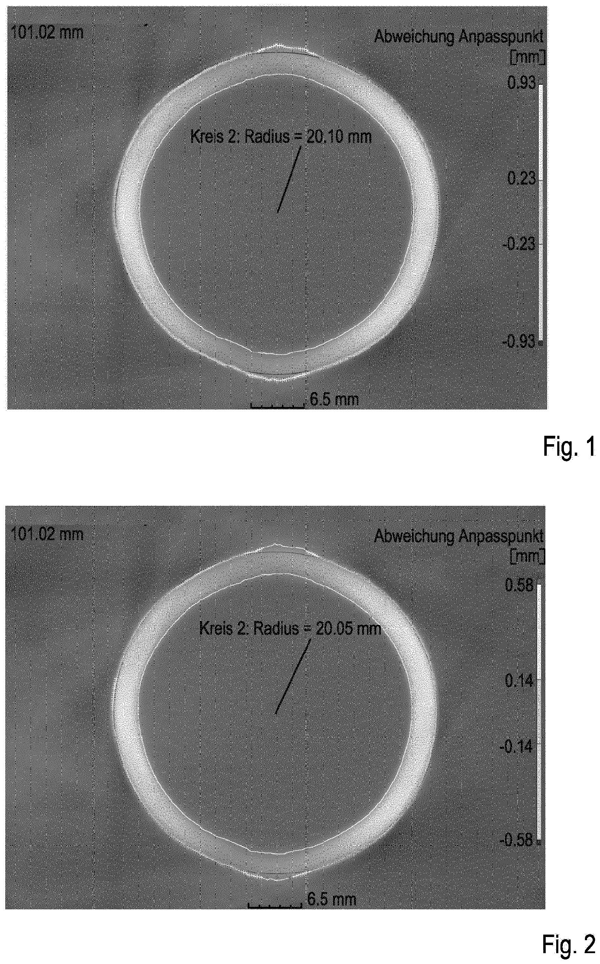

Figur 1 veranschaulicht eine (Außen-)Radius- bzw. Durchmesserbestimmung eines kreisringförmigen Bauteils in konventioneller Vorgehensweise, und Figur 2 zeigt dasselbe Beispiel mit einer erfindungsgemäßen Radiusbestimmung mit einer Gewichtung der Fitpunkte auf der ermittelten Konturlinie.

Figur 1 zeigt ein Grauwertbild einer computertomographischen Messung eines kreisringförmigen Bauteils. Der Kreisring des Bauteils ist in hellen Grauwerten dargestellt, während der Hintergrund mit dunkleren Grauwerten dargestellt ist. Im Idealfall sind das Material weiß und der Hintergrund schwarz, getrennt durch eine scharfe Kante. Im dargestellten Realfall sind die Grauwerte jedoch nicht einheitlich; die Grauwerte des Materials variieren von einem sehr hellen Grau bis zu einem etwas dunkleren Grau, letzteres insbesondere in den in der Darstellung der Figur oben und unten liegenden Bereichen des Kreisrings. Auch die Grauwerte des Hintergrunds variieren; sehr gut erkennbar sind strahlenförmig von dem ringförmigen Material ausgehende Artefakte.

In an sich bekannter Weise werden auf der ermittelten Oberfläche (weiße Konturlinie) sogenannte Fitpunkte (Einpasspunkte) generiert (in dem dargestellten Ausführungsbeispiel auf dem Außenradius des Kreisrings als kleine Kreuzchen bzw. Strichchen dargestellt). Jedem dieser Fitpunkte ist erfindungsgemäß ein Qualitätswert zugeordnet, der angibt, wie gut die Oberfläche an dieser Stelle definiert ist. Anschließend wird in diese Menge aus Fitpunkten ("Fitpunkte-Wolke") rechnerisch ein Kreis eingepasst, der in der Darstellung der Figuren als rote Linie eingezeichnet ist.

In dem Beispiel der Figur 1 werden sämtliche auf der weißen Konturlinie des Außenumfangs des Kreisrings liegenden Fitpunkte in die Kreisberechnung mit eingezogen. Das Ergebnis ist ein Kreis mit einem Radius von 20,10 mm.

In dem Beispiel der Figur 2 werden alle Fitpunkte, deren Qualitätswerte unterhalb einer voreingestellten Schwelle liegen, mit Null gewichtet, d.h. ignoriert. In dem dargestellten Ausführungsbeispiel sind dies die in der Darstellung der Figur ganz oben und ganz unten erkennbaren "Ausreißerwerte". Das Ergebnis dieser Kreisberechnung ist ein Kreis mit einem Radius von 20,05 mm. Dieses Ergebnis unter Berücksichtigung der Qualitätswerte gibt die Realität des gemessenen Objekts besser wieder. Alternativ kann die Gewichtung in Abhängigkeit vom Qualitätsmaß kontinuierlich von 1 bis 0 reichen, wobei die Fitpunkte gemäß ihrer Gewichtung im Einpass-Prozess berücksichtigt werden.

In der Messtechnik soll allgemein möglichst schnell Auskunft darüber erhalten werden, ob ein gemessenes Bauteil die gewünschte Qualität (wie z.B. Einhaltung der Toleranzmaße, Materialfehler, usw.) erfüllt. Dies kann aber nur dann erfolgen, wenn die aus den Grauwerten bestimmte Oberflächendefinition keine Artefakte aufweist, da dann Abweichungen gegenüber dem Idealverlauf (durch Vergleich bspw. mit einem CAD-Modell des gemessenen Objekts) einer tatsächlichen Abweichung im realen Objekt entsprechen. Ist bei ermittelten Abweichungen keine Information über deren Qualität verfügbar, so kann ein Anwender nicht ohne weiteres entscheiden, ob bspw. die in den Figuren 1 und 2 dargestellten oberen und unteren Bereiche Materialfehler/Fertigungsfehler oder Messfehler darstellen.

Mit der Erfindung wird durch die Zuweisung von Qualitätswerten im Umfeld eines gegebenen Messpunktes (bspw. basierend auf einer mathematischen Auswertung des Grauwertverlaufs) der Anwender ohne weiteres in die Lage versetzt, schnell zu erkennen, ob Abweichungen aus Artefakten resultieren.

Das erfindungsgemäße Qualitätsmaß kann auf unterschiedliche Art und Weise bestimmt werden. Grundsätzlich kommen hierfür allgemein gesprochen unterschiedliche Verfahren der Grauwertbetrachtung um einen gegebenen Messpunkt herum in Frage. Dabei kann es sich bspw. um eine Grauwertbetrachtung entlang einer Oberflächennormalen und/oder um eine Gradientenanalyse und/oder die Analyse des Signal-Rausch-Verhältnisses in einem zu definierenden Bereich um den Messpunkt und/oder eine Betrachtung der Normalenrichtungen der Oberfläche und deren Variation in der Umgebung des Aufpunktes (Oberflächenpunktes) handeln. Besonders zuverlässige Ergebnisse werden erzielt, wenn zwei Verfahren der Grauwertbetrachtung bzw. -analyse kombiniert werden.

Eine weitere Möglichkeit der Bestimmung eines Qualitätsmaßes besteht in der Wiederholbarkeit der Kantenfindung, wie bspw. das Auffinden eines Kantenpunktes bei Variation der Eingangsparameter (z.B. Richtungen). Das Qualitätsmaß für den gegebenen Punkt ergibt sich aus der Variation der mit verschiedenen Parametern gefundenen Kantenpunkten; je weiter die Kantenpunkte auseinander liegen, desto schlechter ist die Messung und somit auch das Qualitätsmaß des gegebenen Punktes.

Eine weitere Möglichkeit der Bewertung einer Kante ist die Erzeugung einer eingepassten bzw. gefitteten Modellfunktion zur Wiedergabe einer Kante. Diese kann insbesondere iterativ ermittelt werden, eine größere Anzahl von Einpassschritten führt zu einem belastbareren Ergebnis (in der Praxis wird die Anzahl der Einpassschritte mit dem damit verbundenen Aufwand abzuwägen sein). Ein Vergleich der gefitteten Modellfunktion mit den gemessenen Werten erlaubt dann eine Bewertung der gemessenen Kante.

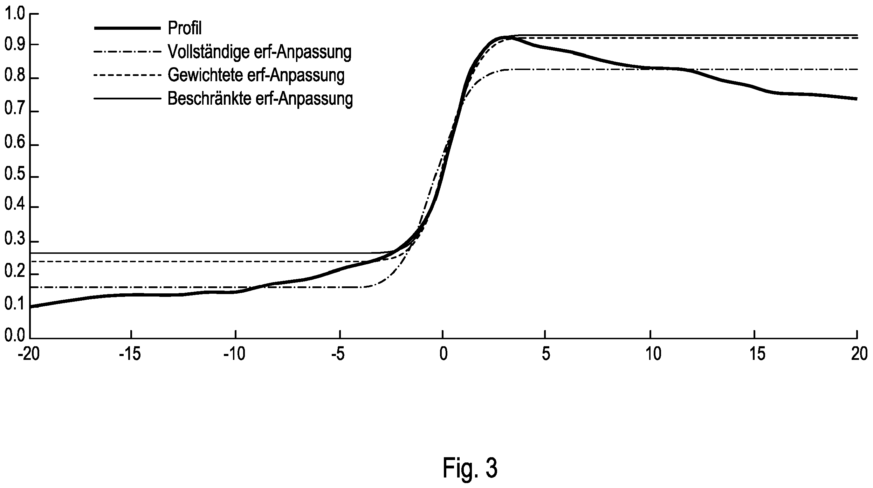

Figur 3 veranschaulicht anhand einer Diagrammdarstellung eine erfindungsgemäße Bestimmung des lokalen Qualitätsmaßes aus einem Grauwertprofil mittels Einpassens einer Modellfunktion, mit, im dargestellten Ausführungsbeispiel, drei Einpassschritten, genauer gesagt eine graphische Darstellung der Ergebnisse der drei Einpassschritte.

Für den Anwendungsfall Koordinatenmesstechnik werden die lokalen Gütemaße wie folgt berücksichtigt: Es werden auf der Oberflächendefinition Fitpunkte generiert. In die derart erhaltenen Fitpunkte werden Referenzelemente wie z.B. Ebenen, Zylinder, usw. eingepasst. Bei diesem Vorgang soll erfindungsgemäß das lokale Qualitätsmaß am Ort eines gegebenen Fitpunktes berücksichtigt werden. Dies erfolgt bspw. dadurch, dass die Punkte in Abhängigkeit ihres Qualitätsmaßes unterschiedlich gewichtet werden. Punkte mit einem unterhalb eines gegebenen Sehwellwerts liegenden Qualitätsmaß werden im Extremfall mit "0" gewichtet, d.h. bei der weiteren Verarbeitung und Bewertung vollständig ignoriert. Zusätzlich kann für ein eingepasstes Referenzelement (d.h. nach durchgeführtem Einpassvorgang) ein gemittelter Qualitätswert angegeben werden.

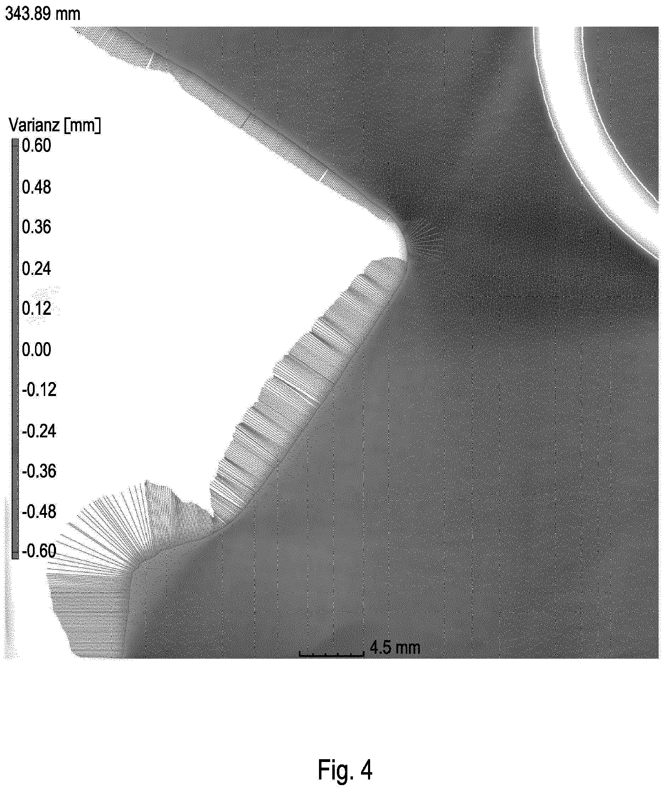

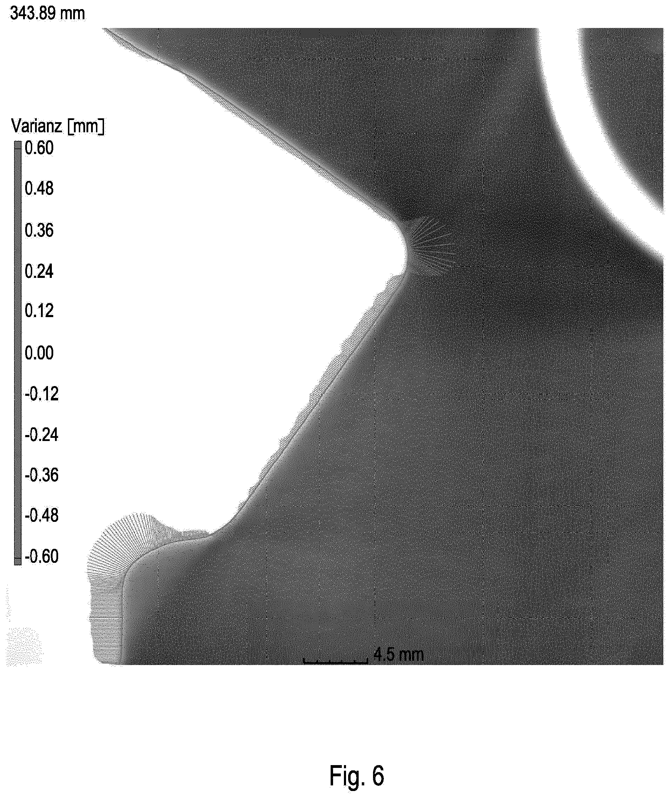

Figuren 4 bis 7 veranschaulichen ebenfalls die Wirkungsweise der Erfindung anhand einer Schnittkante (d.h. eines Soll/Ist-Vergleichs einer Schnittkante), die einmal mittels eines konventionellen Best-Fit-Verfahrens eingepasst wurde (Figur 4) und zum anderen mittels des erfindungsgemäßen Verfahrens unter Berücksichtigung lediglich der Schnittkantenpunkte mit einem oberhalb eines Schwellwert liegenden Qualitätsmaß eingepasst wurde (Figur 6). Die Abweichung zum Sollwert der ermittelten Kante ist in den Figuren 4 und 6 mittels Härchenstrichen angegeben, wobei die Länge der Härchenstriche die Größe der Abweichung angibt. In der Darstellung der Figur 6 sind die Härchenstriche kürzer, womit eine kleinere Abweichung als Ergebnis des erfindungsgemäßen Vorgehens einhergeht.

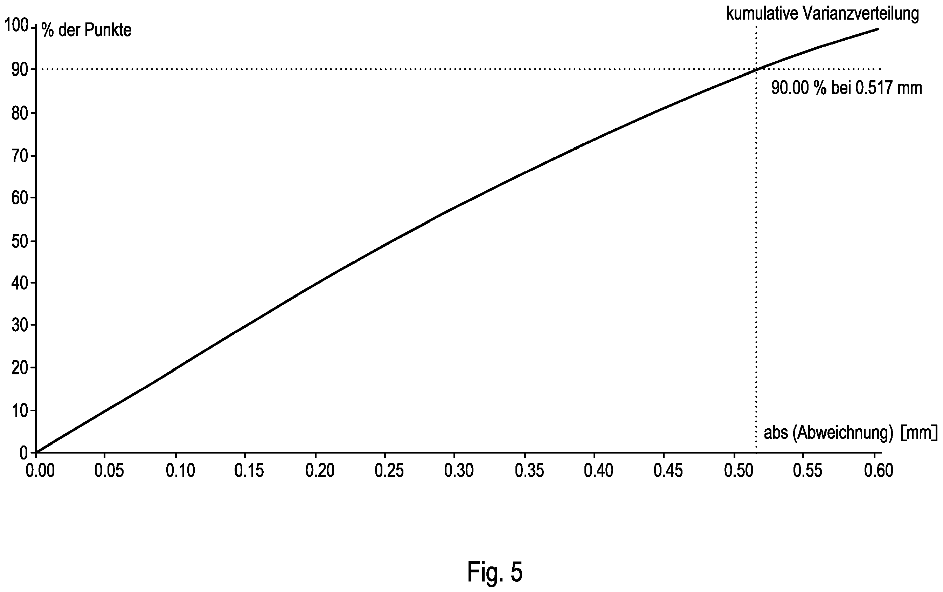

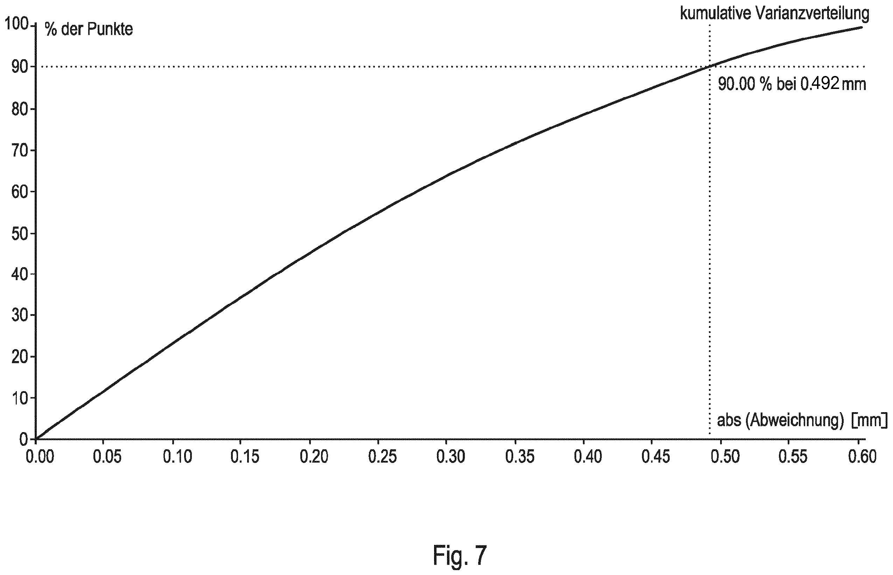

Die Figuren 5 und 7 geben kumulierte Histogramme der Abweichungen der Schnittkanten der Figuren 4 und 6 wieder. Ein Vergleich der beiden Diagramme ergibt, dass der sogenannte 90 %-Abweichungswert bei Berücksichtigung des Qualitätsmaßes gemäß der Erfindung (Figur 7) mit 0,492 mm deutlich kleiner ist als der Wert bei der konventionellen Vorgehensweise (Figur 5) mit 0,517 mm.

Ziel der Erfindung ist es somit, auch die Genauigkeit im Bereich der Koordinatenmesstechnik und bei geometrischen Analysen zu verbessern. Des weiteren ist ein Einsatz der Erfindung bspw. auch im Bereich der Anlagenüberwachung denkbar: ein Testkörper wird in zeitlichen Abständen überprüft und es wird untersucht, ob die Qualität der Messdaten konstant ist oder ob Veränderungen an der Anlage zu einem Qualitätsverlust führen. Aus dem Maß der ermittelten Veränderungen kann ein Signal erzeugt werden, um die Notwendigkeit einer Wartung der Anlage (Trendanalyse) oder einer Reparatur anzuzeigen. Bspw. bei Inline-Messungen (fertigungsbegleitende Inline-Analyse von Produkten) werden Daten in großen Mengen schnell erzeugt. Hier ist ggf. erst einmal zu prüfen, ob ein erhaltener Datensatz in Ordnung ist (d.h. eine ausreichende Messgüte aufweist), bevor eine komplexe Auswertung gestartet wird, die viel Zeit in Anspruch nimmt.

Zur graphischen Darstellung für den Benutzer kann für den vollständigen oder teilweisen Datensatz ein Histogramm über die lokalen Qualitätswerte berechnet und daraus statistische Größen wie Mittelwert und Standardabweichung abgeleitet werden. Das Histogramm und die Werte können graphisch dargestellt werden. Zudem kann dem Benutzer die Möglichkeit gegeben werden, Toleranzintervalle zu definieren. Damit ist es in den dargestellten Szenarien bspw. möglich, Abweichungen von einem vorher ermittelten Normalzustand zu detektieren und den Benutzer zu warnen.

Mit dem vorgeschlagenen Qualitätsmaß werden für die Folgeverarbeitung von Bilddaten neue Möglichkeiten eröffnet. Bspw. kann durch Bestimmen des lokalen Qualitätsmaßes das Gesamtvolumen von abzuspeichernden Daten deutlich reduziert werden, ohne relevante Informationen zu verlieren. Die ursprünglichen Grauwertdaten sind für die Weiterverarbeitung dann nicht mehr zwingend nötig und können weggelassen werden. Ein Messtechnik-Anwender, der mit dem Konturdatensatz arbeitet, kann trotz des reduzierten Datenvolumens von einer höheren Präzision profitieren, bspw. wenn die von ihm zu analysierenden Daten auf der Grundlage des zugeordneten Qualitätsmaßes einer unterschiedlichen Gewichtung unterzogen werden. Die Erfindung erhöht somit die Genauigkeit im Bereich der Koordinatenmesstechnik und bei geometrischen Analysen bei gleichzeitiger Reduktion der Datenmenge.

Die Erfindung ermöglicht auch eine verbesserte Anwendung im Bereich der fertigungsbegleitenden Inline-Analyse von Produkten, da eine Entscheidung über die Qualität einer Messung sehr viel schneller erfolgen kann. Darüber hinaus ist mit der Erfindung eine Verbesserung der Messgenauigkeit verbunden, wodurch die Anzahl der Pixel bzw. Voxel verringert werden kann, was sich wiederum sehr vorteilhaft auf die Mess- und Verarbeitungsgeschwindigkeit (und natürlich die Datenreduktion) auswirkt.

## Patentansprüche

1. Vorrichtung zur Verarbeitung eines Volumenbilddatensatzes, mit einem Gerät zum Durchführen eines nicht-optischen Bildabtastungsverfahrens an einem zu untersuchenden Objekt und Erzeugen eines Volumenbilddatensatzes und mit einer Recheneinrichtung, die dazu programmiert ist, eine Objektkontur aus dem Volumenbilddatensatz zur Bestimmung der Lage der Objektoberfläche zu extrahieren, wobei die Recheneinrichtung des Weiteren dazu programmiert ist, mindestens eine Umgebung für einen Objektoberflächenpunkt festzulegen, die Grauwerte innerhalb der Umgebung zu analysieren und einen Qualitätswert für den Objektoberflächenpunkt zur Wiedergabe einer lokalen Güte der Oberfläche zu berechnen, wobei die lokale Güte angibt, wie gut ein gegebener Objektoberflächenpunkt einen Rückschluss auf die tatsächliche Objektgeometrie des zu untersuchenden Objekts zulässt, wobei zur Berechnung einer bildlichen Wiedergabe und/oder zu weiterführenden Analysen des zu untersuchenden Objekts eine unterschiedliche Gewichtung der Oberflächenpunkte in Abhängigkeit von dem berechneten Qualitätswert erfolgt, wobei die Recheneinrichtung des Weiteren dazu programmiert ist, einen eine Messunsicherheit reflektierenden Faktor basierend auf dem Qualitätswert zu ermitteln, wobei die Messunsicherheit sich auf Fitpunkte für die Oberflächenpunkte bezieht, wobei an die Fitpunkte ein Referenzelement eingepasst wird, wobei bei der Analyse Sekundärinformationen berücksichtigt werden, wobei es sich bei Sekundärinformationen um Informationen aus dem Gesamtvolumen, vorzugsweise statistische Informationen, oder Informationen von anderen/benachbarten Aufpunkten oder um Vorwissen, vorzugsweise aus vorliegenden Objektdaten, handelt, wobei die Recheneinrichtung weiter dazu programmiert ist, das nicht-optische Bildabtastungsverfahren und die sich anschließende Berechnung eines Qualitätswertes regelmäßig mittels eines Testobjekts auszuführen und die Ergebnisse aufeinander folgender Qualitätswertberechnungen miteinander zu vergleichen und ein Maß für ermittelte Veränderungen zu berechnen, um in Abhängigkeit von dem berechneten Maß für ermittelte Veränderungen ein Signal zu erzeugen, um die Notwendigkeit einer Wartung oder Reparatur der Vorrichtung anzuzeigen.

2. Vorrichtung nach Anspruch 1, die des Weiteren eine Anzeigeeinrichtung umfasst, mittels welcher eine Anzeige der Qualitätswerte erfolgt.

3. Computer-implementiertes Verfahren zur Verarbeitung eines Volumenbilddatensatzes mit den folgenden Schritten:
- Durchführen eines nicht-optischen Bildabtastungsverfahrens an einem zu untersuchenden Objekt und Erzeugen eines Volumenbilddatensatzes und Extrahieren der Objektkontur aus dem Volumenbilddatensatz zur Bestimmung der Lage der Objektoberfläche,
- Festlegen eines Objektoberflächenpunkts und einer Umgebung für diesen Objektoberflächenpunkt und Analysieren der Grauwerte innerhalb der Umgebung,
- Berechnen eines eine lokale Güte der Oberfläche reflektierenden Qualitätswertes für den Objektoberflächenpunkt basierend auf der Grauwertanalyse, wobei die lokale Güte angibt, wie gut ein gegebener Objektoberflächenpunkt einen Rückschluss auf die tatsächliche Objektgeometrie des zu untersuchenden Objekts zulässt,
wobei die Oberflächenpunkte zur Berechnung einer bildlichen Wiedergabe und/oder zu weiterführenden Analysen des zu untersuchenden Objekts in Abhängigkeit von dem berechneten Qualitätswert unterschiedlich gewichtet werden, wobei das Verfahren des Weiteren den Schritt des Ermittelns eines eine Messunsicherheit reflektierenden Faktors basierend auf dem Qualitätswert umfasst, wobei die Messunsicherheit sich auf Fitpunkte für die Oberflächenpunkte bezieht, wobei an die Fitpunkte ein Referenzelement eingepasst wird,
wobei der Schritt des Analysierens die Berücksichtigung von Sekundärinformationen umfasst, wobei es sich bei Sekundärinformationen um Informationen aus dem Gesamtvolumen, vorzugsweise statistische Informationen, oder Informationen von anderen/benachbarten Aufpunkten oder um Vorwissen, vorzugsweise aus vorliegenden Objektdaten, handelt,
wobei das nicht-optische Bildabtastungsverfahren und die sich anschließende Berechnung eines Qualitätswertes regelmäßig mittels eines Testobjekts an der Vorrichtung nach Anspruch 1 ausgeführt werden und die Ergebnisse aufeinander folgender Qualitätswertberechnungen miteinander verglichen und ein Maß für ermittelte Veränderungen berechnet werden, um in Abhängigkeit von dem berechneten Maß für ermittelte Veränderungen ein Signal zu erzeugen, um die Notwendigkeit einer Wartung oder Reparatur der Vorrichtung anzuzeigen.

4. Verfahren nach Anspruch 3, bei dem das Berechnen des Qualitätswertes mittels einer Methode oder einer Kombination von mindestens zwei Methoden zur Analyse des Grauwertverhaltens um einen gegebenen Objektoberflächenpunkt erfolgt.

5. Verfahren nach einem der Ansprüche 3 oder 4, bei dem der Qualitätswert aus der Analyse des Signal/Rausch Verhältnisses, aus der Analyse des Gradientenverlaufs, aus der Analyse aller aus der Kantenfindung resultierenden Parameter, aus der Analyse der Wiederholbarkeit der Kantenfindung, aus der statistischen Analyse oder der Merkmalsanalyse der Grauwertprofile entlang mindestens einer Trajektorie, aus der statistischen Analyse oder der Merkmalsanalyse der Grauwertprofile in der Umgebung um den Oberflächenpunkt oder aus einer Kombination einer oder mehrerer dieser Berechnungen resultiert.

6. Verfahren nach einem der Ansprüche 3 bis 5, bei dem das Festlegen der Umgebung für den Objektoberflächenpunkt das Festlegen mindestens einer Trajektorie durch diesen Objektoberflächenpunkt umfasst und der Schritt des Analysierens das Analysieren des Grauwertverlaufs entlang der Trajektorie umfasst.

7. Verfahren nach einem der Ansprüche 3 bis 6, bei dem eine Gewichtung gemäß einer oder mehrerer der folgenden Regeln erfolgt:
- kontinuierliche Gewichtung zwischen 0 und 1,
- diejenigen Oberflächenpunkte, deren Qualitätswert unterhalb einer vorgegebenen oder vorgebbaren Schwelle liegt, werden mit Null gewichtet,
- die nicht mit Null gewichteten Oberflächenpunkte werden gleich gewichtet oder unterschiedlich zwischen 0 und 1 gewichtet.

8. Verfahren nach einem der Ansprüche 3 bis 7, bei dem zur Weiterverarbeitung jedem Oberflächenpunkt eine Güteinformation zugeordnet ist.

9. Verfahren nach Anspruch 8, bei dem eine Visualisierung der Güteinformation erfolgt.

10. Computerlesbarer Datenträger mit Programmcodemitteln zum Durchführen eines Verfahrens nach einem der Ansprüche 3 bis 9, wenn die Programmcodemittel auf einem Computer oder einer entsprechenden Recheneinheit ausgeführt werden.

## Claims

1. Apparatus for processing a volumetric image data set, comprising a device for performing a non-optical image scanning method on an object that is to be examined and generating a volumetric image data set, and a processor programmed to extract an object contour from the volumetric image data set for determining the location of the object surface,
wherein the processor is further programmed to define at least one environment for an object surface point, to analyse the greyscale values within the environment and to calculate a quality value for the object surface point for reproducing a local quality of the surface, the local quality indicating how well a given object surface point permits a conclusion to be drawn about the actual object geometry of the object that is to be examined,
wherein, for calculating an image rendering and/or for further analyses of the object that is to be examined, the surface points are weighted differently, depending on the calculated quality value,
wherein the processor is further programmed to determine a factor reflecting a measurement uncertainty based on the quality value, wherein the measurement uncertainty relates to fitted points for the surface points,
wherein a reference element is matched to the fitted points, wherein secondary information is taken into account in the analysis, secondary information being information from the total volume, preferably statistical information, or information from other/adjacent reference points or prior knowledge, preferably from existing object data,
wherein the processor is further programmed to perform the non-optical image scanning method and the subsequent calculation of a quality value regularly by means of a test object and to compare the results of successive quality value calculations with each other and to calculate a measure of detected changes, in order to, depending on the calculated measure of detected changes, generate a signal, in order to indicate the need for maintenance or repair of the apparatus.

2. Apparatus according to claim 1, further comprising a display device by means of which the quality values are displayed.

3. Computer-implemented method of processing a volumetric image data set comprising the steps of:
- carrying out a non-optical image scanning method on an object that is to be examined and generating a volumetric image data set and extracting the object contour from the volumetric image data set to determine the location of the object surface,
- defining an object surface point and an environment for that object surface point and analysing the greyscale values within the environment,
- calculating a quality value reflecting a local quality of the surface for the object surface point based on the greyscale value analysis, wherein the local quality indicates how well a given object surface point allows a conclusion to be drawn about the actual object geometry of the object that is to be examined,
wherein the surface points are weighted differently depending on the calculated quality value for the calculation of an image rendering and/or for further analyses of the object under examination, the method further comprising the step of determining a factor reflecting a measurement uncertainty based on the quality value, wherein the measurement uncertainty relates to fitted points for the surface points, wherein a reference element is matched to the fitted points,
wherein the analysing step comprises taking into account secondary information, secondary information being information from the total volume, preferably statistical information, or information from other/adjacent reference points, or prior knowledge, preferably from existing object data,
wherein the non-optical image scanning method and the subsequent calculation of a quality value are performed regularly by means of a test object on the apparatus according to claim 1, and the results of successive quality value calculations are compared with each other and a measure of determined changes is used in order to, depending on the calculated measure of detected changes, generate a signal, in order to indicate the need for maintenance or repair of the apparatus.

4. Method according to claim 3, in which the quality value calculation is performed using a method or a combination of at least two methods for analysing the greyscale value behaviour around a given object surface point.

5. Method according to any one of claims 3 or 4, wherein the quality value results from the analysis of the signal-to-noise ratio, from the analysis of the gradient behaviour, from the analysis of all parameters resulting from the edge finding, from the analysis of the reproducibility of the edge finding, from the statistical analysis or feature analysis of the greyscale level profiles along at least one trajectory, from the statistical analysis or feature analysis of the greyscale level profiles in the environment around the surface point, or from a combination of one or more of these calculations.

6. Method according to any one of claims 3 to 5, in which the defining of the environment for the object surface point comprises defining at least one trajectory through that object surface point, and the analysing step comprises analysing the greyscale value trend along the trajectory.

7. Method according to any one of claims 3 to 6, in which weighting is performed according to one or more of the following rules:
- continuous weighting between 0 and 1,
- those surface points whose quality value is below a predetermined or predeterminable threshold are weighted with zero,
- those surface points not weighted with zero are weighted equally or differently between 0 and 1.

8. Method according to any one of claims 3 to 7, in which, for further processing, quality information is associated with each surface point.

9. Method according to claim 8, in which the quality information is visualised.

10. Computer-readable data carrier with program code means for carrying out a method according to any one of claims 3 to 9, when the program code means are executed on a computer or a corresponding processing unit.

## Revendications

1. Dispositif de traitement d'un jeu de données d'image volumique, avec un équipement pour réaliser un procédé de balayage d'image non optique au niveau d'un objet à examiner et générer un jeu de données d'image volumique et avec un appareil informatique qui est programmé pour extraire du jeu de données d'image volumique un contour d'objet pour la détermination de la position de la surface d'objet, dans lequel l'appareil informatique est en outre programmé pour définir au moins un environnement pour un point de surface d'objet, analyser les valeurs de gris au sein de l'environnement et calculer une valeur de qualité pour l'objet de surface d'objet pour la restitution d'une propriété locale de la surface, dans lequel la propriété locale indique la qualité d'un point de surface d'objet donné pour permettre une déduction de la géométrie d'objet effective de l'objet à étudier, dans lequel pour le calcul d'une restitution d'image et/ou des analyses à mener ultérieurement de l'objet à étudier une pondération différentielle des points de surface a lieu en fonction de la valeur de qualité calculée, dans lequel l'appareil informatique est en outre programmé pour déterminer un facteur reflétant une sécurité de mesure sur la base de la valeur de qualité, dans lequel la sécurité de mesure se rapporte à des points de repère pour les points de surface, dans lequel au niveau des points de repère un élément de référence est adapté, dans lequel lors de l'analyse des informations secondaires sont prises en compte, dans lequel il s'agit pour les informations secondaires d'informations issues du volume total, de préférence des informations statistiques, ou des informations d'autres points d'impact/de points d'impact adjacents ou de la connaissance préalable, de préférence à partir de données d'objet présentes, dans lequel l'appareil informatique est en outre programmé pour exécuter le procédé de balayage d'image non optique et le calcul qui en découle d'une valeur de qualité régulièrement au moyen d'un objet test et comparer entre eux les résultats de calculs de valeurs de qualité suivants et calculer un niveau pour des modifications déterminées pour générer un signal en fonction du niveau calculé pour des modifications déterminées pour afficher le besoin d'un entretien ou d'une réparation du dispositif.

2. Procédé selon la revendication 1 qui comprend en outre un appareil d'affichage au moyen duquel un affichage des valeurs de qualité a lieu.

3. Procédé mis en œuvre par ordinateur pour le traitement d'un jeu de données d'image volumique avec les étapes suivantes :
- réalisation d'un procédé de balayage d'image non optique au niveau d'un objet à étudier et génération d'un jeu de données d'image volumique et extraction du contour d'objet à partir du jeu de données d'image volumique pour la détermination de la position de la surface d'objet,
- définition d'un point de surface d'objet et d'un environnement pour ce point de surface d'objet et analyse des valeurs de gris au sein de l'environnement,
- calcul d'une valeur de qualité reflétant une propriété locale de la surface pour le point de surface d'objet sur la base de l'analyse des valeurs de gris, dans lequel la propriété locale indique la qualité d'un point de surface d'objet donné pour permettre une déduction de la géométrie d'objet effective de l'objet à étudier,
dans lequel les points de surface sont pondérés différemment pour le calcul d'une restitution d'image et/ou pour des analyses à mener ultérieurement de l'objet à étudier en fonction de la valeur de qualité calculée, dans lequel le procédé comprend en outre l'étape de détermination d'un facteur reflétant une sécurité de mesure sur la base de la valeur de qualité, dans lequel la sécurité de mesure se rapporte à des points de repère pour les points de surface, dans lequel un élément de référence est adapté aux points de repère,
dans lequel l'étape de l'analyse comprend la prise en compte d'informations secondaires, dans lequel il s'agit dans le cas des informations secondaires d'informations issues du volume total, de préférence des informations statistiques, ou des informations d'autres points d'impact/de points d'impact adjacents ou de la connaissance préalable, de préférence à partir de données d'objet présentes,
dans lequel le procédé de balayage d'image non optique et le calcul qui en découle d'une valeur de qualité sont exécutés régulièrement au moyen d'un objet de test au niveau du dispositif selon la revendication 1 et les résultats de calculs de valeurs de qualité successifs sont comparés entre eux et un niveau pour des modifications déterminées est calculé pour générer un signal en fonction du niveau calculé pour des modifications déterminées pour afficher le besoin d'un entretien ou d'une réparation du dispositif.

4. Procédé selon la revendication 3, dans lequel le calcul de la valeur de qualité a lieu au moyen d'une méthode ou d'une combinaison d'au moins deux méthodes pour l'analyse du comportement de valeurs de gris pour un point de surface d'objet donné.

5. Procédé selon l'une quelconque des revendications 3 ou 4, dans lequel la valeur de qualité résulte de l'analyse du rapport signal/bruit, de l'analyse de l'évolution de gradients, de l'analyse de tous les paramètres résultant de la recherche de bords, de l'analyse de la répétitivité de la recherche de bords, de l'analyse statistique ou de l'analyse de caractéristiques des profils de valeurs de gris le long d'au moins une trajectoire, de l'analyse statistique ou de l'analyse de caractéristiques des profils de valeurs de gris dans l'environnement autour du point de surface ou d'une combinaison d'un ou plusieurs de ces calculs.

6. Procédé selon l'une quelconque des revendications 3 à 5, dans lequel la définition de l'environnement pour le point de surface d'objet comprend la définition d'au moins une trajectoire à travers ce point de surface d'objet et l'étape de l'analyse comprend l'analyse de l'évolution de valeurs de gris le long de la trajectoire.

7. Procédé selon l'une quelconque des revendications 3 à 6, dans lequel une pondération a lieu selon une ou plusieurs des règles suivantes :
- pondération continue entre 0 et 1,
- les points de surface dont la valeur de qualité se situe en dessous d'un seuil prédéfini ou prédéfinissable sont pondérés avec zéro,
- les points de surface non pondérés avec zéro sont pondérés de manière identique ou pondérés de manière différente entre 0 et 1.

8. Procédé selon l'une quelconque des revendications 3 à 7, dans lequel une information de propriété est associée à chaque point de surface pour un traitement ultérieur.

9. Procédé selon la revendication 8, dans lequel une visualisation de l'information de propriété a lieu.

10. Support de données lisible sur ordinateur avec des moyens de code de programme pour la réalisation d'un procédé selon l'une quelconque des revendications 3 à 9, lorsque les moyens de code de programme sont exécutés sur un ordinateur ou une unité informatique correspondante.
